# EUROPÄISCHE PATENTSCHRIFT

(11) **EP 1 893 438 B1**
(45) Veröffentlichungstag und Bekanntmachung des Hinweises auf die Patenterteilung: **16.03.2011**
(21) Anmeldenummer: 06754060.9
(22) Anmeldetag: 02.06.2006
(51) Int. Cl.: B60N 2/225

(54) **BESCHLAG FÜR EINEN FAHRZEUGSITZ**
FITTING FOR A VEHICLE SEAT
FERRURE POUR SIEGE DE VEHICULE

(30) Priorität: 22.06.2005 DE 102005028779
(43) Veröffentlichungstag der Anmeldung: 05.03.2008
(73) Patentinhaber: KEIPER GmbH & Co. KG, 67657 Kaiserslautern (DE)
(72) Erfinder: STEMMER, Jürgen, 42897 Remscheid (DE); MESSERSCHMIDT, Rainer, 40211 Düsseldorf (DE); EWALD, Tobias, 45257 Essen (DE); SCHOLZ, Grit, 42853 Remscheid (DE); NORBISRATH, Andreas, 42279 Wuppertal (DE); KOMAINDA, Artur, 42855 Remscheid (DE); FINNER, Holger, 42499 Hückeswagen (DE); LEHMANN, Ulrich, 53347 Alfter (DE)
(74) Vertreter: Patentanwälte Hosenthien-Held und Dr. Held
(86) Internationale Anmeldenummer: PCT/EP2006/005255
(87) Internationale Veröffentlichungsnummer: WO 2006/136275

(56) Entgegenhaltungen:
- DE-A1- 10 352 630
- DE-C1- 3 129 672
- US-A- 4 614 257
- US-A1- 2004 014 545

## Beschreibung

Die Erfindung betrifft einen Beschlag für einen Fahrzeugsitz mit den Merkmalen des Oberbegriffs des Anspruches 1.

Bei einem aus der DE 103 52 630 A1 bekannten Beschlag dieser Art ist außen eine Bremse aufgesetzt, welche im Ruhezustand des Beschlags die Antriebswelle gegenüber dem ersten Beschlagteil festhält. Abtriebsseitig eingeleitete Drehmomente, beispielsweise aufgrund des Gewichtes der Lehne, einer gezielten Belastung derselben oder durch Vibrationen, werden somit gesperrt. Wenn der Beschlag angetrieben wird, löst sich die Bremse, so dass die Beschlagteile ungehindert ihre Abwälzbewegung ausführen können.

Die DE 31 29 672 C1 welche als wächstliegender Stand der technik betrachtet wird zeigt einen Beschlag mit einem nichtselbsthemmenden Exzentergetriebe als Arbeitsgetriebe und einem selbsthemmenden Exzentergetriebe zum Sperren der abtriebsseitig eingeleiteten Drehmomente. Zur Erzeugung der Selbsthemmung verspannt eine Feder zwei radial geschachtelte Exzenterteile gegeneinander, was die Exzentrizität und damit die die Reibung erzeugenden Normalkräfte im Getriebe vergrößert. Nach dem gleichen Prinzip und mit gleicher Wirkung verspannt eine Feder in der US 2004/0014545 A1 zwei axial geschachtelte Exzenterteile gegeneinander.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Mit der Schlingfederbremse, welche der Mitnehmer und/oder der Exzenter ansteuern, ist eine funktionelle Integration der Bremse in den Beschlag möglich, bei welcher Bauteile des Getriebebeschlags in einer Doppelfunktion auch der Ansteuerung der Bremse dienen. Als Gegenstück für die Bremswirkung ist am zweiten Beschlagteil eine Schlingfederbuchse vorgesehen, an welcher die Schlingfederbremse anliegt. Die Ansteuerung kann unmittelbar, d.h. durch direkte Anlage des Mitnehmers und/oder Exzenters an vorzugsweise zum Ansteuern der Schlingfederbremse vorgesehene Schlingfederarme und anschließendem Beaufschlagen der letzteren, oder mittelbar erfolgen, d.h. unter Verwendung von Zwischenbauteilen, wie Scheiben oder gesonderte Nocken. Mit der funktionellen Integration geht eine bauliche Integration einher, beispielsweise durch eine Anordnung der Schlingfederarme im Zentrum des Beschlags oder die Aufnahme einer gesondert ausgebildeten Schlingfederbuchse durch das zweite Beschlagteil oder die einstückige Ausbildung der Schlingfederbuchse mit dem zweiten Beschlagteil, beispielsweise als Kragenzug, Absatz oder breitere Lagerbohrung des zweiten Beschlagteils. Dabei kann die Innenseite oder die Außenseite die relevante Fläche zur Erzeugung der Bremswirkung sein. Der Aufbau einer Schlingfederbremse ist beispielsweise in der US 4,614,257 A beschrieben.

Ein derartiger Beschlag, der auf wenigstens einer Fahrzeugsitzseite vorgesehen ist, ist sowohl ablaufsicher als auch günstig bezüglich des Wirkungsgrades. Unter "Ablaufen" ist zu verstehen, dass die beiden Beschlagteile durch regelmäßige oder unregelmäßige mechanische Anregungen (Vibrationen oder Erschütterungen) eine Drehung des Exzenters bewirken, welche unter dem Drehmoment des Gewichtes der Lehne zu einer Abwälzbewegung der Beschlagteile mit Rückwärtsschwenken der Lehne führt. Auf der anderen Fahrzeugsitzseite braucht keine derartige Bremse im Beschlag vorgesehen zu sein, jedoch ist vorzugsweise an beiden Fahrzeugsitzseiten je eine Bremse vorgesehen. Die Schlingfederbremse liefert ein hohes abtriebsseitiges Sperrmoment, dreht aber bei einer antriebsseitigen Einleitung eines Drehmomente mit einem im Verhältnis zum Sperrmoment geringen Freilaufmoment mitdreht.

Nachdem antriebsseitige Drehmomente über den Mitnehmer eingeleitet werden, ist der Mitnehmer vorzugsweise so ausgebildet, dass er öffnend auf die Schlingfederbremse wirkt und diese beim Antrieb löst, beispielsweise indem der Mitnehmer wenigstens einen Mitnehmernocken aufweist, welcher bei Anlage an einen Schlingfederarm mit anschließendem Beaufschlagen des letzteren öffnend auf die Schlingfederbremse wirkt. Alternativ kann der Mitnehmer eine - gegebenenfalls Spiel behaftete - Aufnahme für einen Schlingfederarm aufweisen.

Da der Exzenter aufgrund seiner Lagerung - einerseits am ersten Beschlagteil und andererseits am zweiten Beschlagteil - im Kraftfluss liegt und zusätzlich zu den Verzahnungen zwischen den Beschlagteilen die abtriebsseitig eingeleiteten Kräfte und Drehmomente einschließlich deren Schwankungen durch mechanische Anregungen empfängt, ist der Exzenter vorzugsweise so ausgebildet, dass er schließend auf die Schlingfederbremse wirkt, so dass diese ihr Sperrmoment und damit ihre Bremswirkung erzeugen kann, beispielsweise indem der Exzenter einen Steuernocken aufweist, welcher bei Anlage an einen Schlingfederarm mit anschließendem Beaufschlagen des letzteren schließend auf die Schlingfederbremse wirkt. Alternativ kann der Exzenter eine - gegebenenfalls Spiel behaftete - Aufnahme für einen Schlingfederarm aufweisen. Die Lagerung des Exzenters an einem Beschlagteil soll alle Varianten der relativen Lagerung von Exzenter und Beschlagteil beinhalten, d.h. der Exzenter kann beispielsweise in (radial innerhalb) einem Kragenzug oder Absatz des Beschlagteils oder auf (radial außerhalb) demselben gelagert sein

Die Schlingfederbremse erzeugt ihr Sperrmoment vorzugsweise durch Anlage an eine Schlingfederbuchse, welche drehfest zum zweiten Beschlagteil ist, vorzugsweise durch einen Formschluss zwischen geeigneten Vorsprüngen, beispielsweise radial abstehenden Armen, der Schlingfederbuchse und einer herstellungsbedingt vorhandenen Innenverzahnung des zweiten Beschlagteils. Die Schlingfederbremse ist vorzugsweise innerhalb der Schlingfederbuchse angeordnet, so dass sie an deren Innenwand anliegt und ihre Schlingfederarme radial nach innen ragen.

Vorzugsweise ist der Exzenter wenigstens teilweise, beispielsweise ein einzelnes Keilsegment desselben, sowohl am ersten Beschlagteil als auch am zweiten Beschlagteil mit geringer Reibung gelagert ist, insbesondere mittels eines Gleitlagers und/oder Wälzlagers und/oder einer Oberflächenbearbeitung und/oder Oberflächenbehandlung. Da die Reibung zwischen dem Gleitlager (oder Wälzlager) und dem relativ zu diesem gleitenden Bauteil geringer ist als die direkte Reibung zwischen den Keilsegmenten und den Beschlagteilen, reduzieren sich die Verluste beim Antreiben des Beschlags, d.h. während der Einstellbewegung, womit sich der Wirkungsgrad des Beschlags erhöht. Bei gleicher Abtriebsleistung ist somit eine geringere Antriebsleistung nötig. Die Spielfreiheit und die Festigkeit bleiben erhalten:
Die geringere Reibung des Gleitlagers gegenüber gewöhnlichem Stahl beruht auf einer speziellen Oberflächenbearbeitung und/oder Oberflächenbehandlung. Eine solche Oberflächenbearbeitung (beispielsweise mechanisch) oder Oberflächenbehandlung (beispielsweise chemisch) einschließlich Aufbringung einer Beschichtung kann auch direkt an den Beschlagteilen erfolgen. Die geringere Reibung des Wälzlagers gegenüber der Gleitreibung von gewöhnlichem Stahl beruht auf der Rollreibung der Wälzkörper. Die Gleitlager oder Wälzlager etc. können auch in gemischter Kombination vorgesehen sein.

Der Exzenter kann zwei Keilsegmente aufweisen, die auseinander gespannt sind, und dadurch den Beschlag im Ruhezustand spielfrei stellen. Die Keilsegmente bewegen sich vorzugsweise in der axial gleichen Ebene, welche parallel zu den Bewegungsebenen der Beschlagteile ist. Die Keilsegmente im Sinne der Erfindung können auch jeweils an einer Scheibe ausgebildet sein, wobei dann die beiden (exzentrischen) Scheiben axial versetzt zueinander angeordnet sind. Der Exzenter kann - unter Verzicht auf die Spielfreistellung - auch einteilig sein, beispielsweise als Sichelelement oder scheibenförmiger Festexzenter ausgebildet sein, was die Herstellung und Montage vereinfacht. Der Mitnehmer kann einteilig oder mehrteilig sein.

Da die Lehne mehr nach hinten als nach vorne belastet wird, ist ein Keilsegment höher belastet, so dass an diesem prinzipiell eine höhere Reibung auftritt. Vorzugsweise ist daher das höher belastete Keilsegment das beidseitig mittels Gleitlager gelagerte Keilsegment. Es können jedoch auch das andere Keilsegment oder -ebenfalls bevorzugt - beide Keilsegmente beidseitig mittels Gleitlagern gelagert sein.

Es ist möglich, dass für jede der beiden Drehrichtungen des Mitnehmers eine Schlingfederbremse vorgesehen ist. Dadurch wird das stärker belastete Keilsegment (Laufkeil) bei einer Ablaufbewegung sofort und direkt in beide Richtungen gesperrt, ohne dass zuerst ein Ausweichen aufgrund eines vorhandenen Leerwegs bis zur Anlage an den zugeordneten Schlingfederarm erfolgt. Das weniger belastete Keilsegment (Sperrkeil) übernimmt dann die Spielfreistellung im Ruhezustand des Beschlags.

Der erfindungsgemäße Beschlag kann sowohl manuell betrieben als auch motorisch betrieben werden und in Fahrzeugsitzen einsetzt werden, vorzugsweise für eine winkeleinstellbare Sitzkomponente, insbesondere Sitzteil oder Lehne, zur Einstellung eines Winkels innerhalb der Sitzkomponente, beispielsweise der Neigung des Sitzkissens relativ zu einer Basis, der Neigung einer Oberschenkelunterstützung relativ zum Sitzrahmen oder der Neigung von Schwingen, welche der Einstellung der Sitzhöhe dienen, zum Sitzrahmen oder zu einer Basis, oder zur Einstellung eines Winkels relativ zu einer anderen Sitzkomponente, beispielsweise der Neigung der Lehne relativ zum Sitzteil.

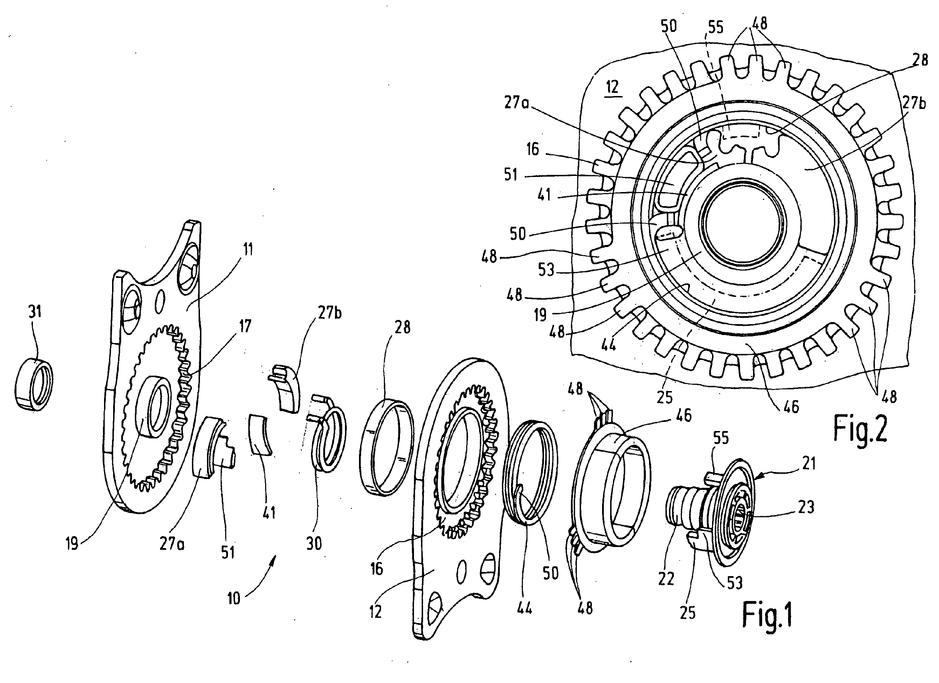

Im folgenden ist die Erfindung anhand von fünf in der Zeichnung dargestellten Ausführungsbeispielen mit Abwandlungen näher erläutert. Es zeigen
- Fig. 1: eine Explosionsdarstellung des ersten Ausfiihrungsbeispiels,
- Fig. 2: eine Teilansicht des ersten Ausführungsbeispiels mit nur teilweise angedeu- tetem Mitnehmer,

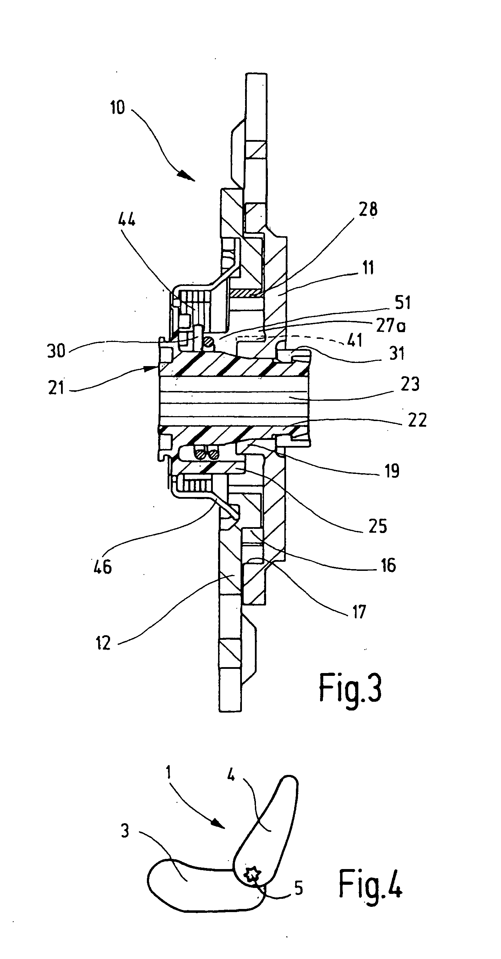

- Fig. 3: einen Längsschnitt eines erfindungsgemäßen Beschlags,
- Fig. 4: eine schematische Darstellung eines Fahrzeugsitzes,

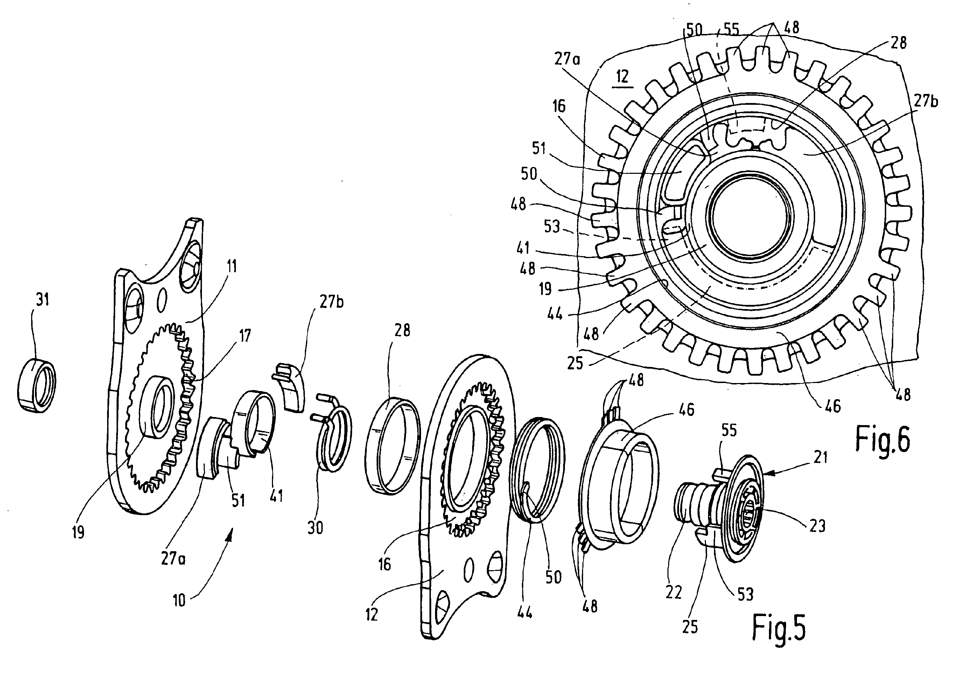

- Fig. 5: eine Explosionsdarstellung des zweiten Ausfiihrungsbeispiels,
- Fig. 6: eine Teilansicht des zweiten Ausführungsbeispiels ohne Mitnehmer,
- Fig. 7: eine Explosionsdarstellung des dritten Ausführungsbeispiels,
- Fig. 8: eine Explosionsdarstellung des vierten Ausführungsbeispiels ohne zweites Beschlagteil,
- Fig. 9: eine Ansicht des vierten Ausführungsbeispiels ohne Mitnehmer,
- Fig. 10: eine Explosionsdarstellung des fünften Ausführungsbeispiels,
- Fig. 11: eine Ansicht des fünften Ausführungsbeispiels mit nur teilweise angedeute- tem Mitnehmer,
- Fig. 12: eine Prinzipskizze einer Abwandlung mit zwei Schlingfederbremsen, und
- Fig. 13: eine perspektivische Teilansicht der Abwandlung mit zwei Schlingfeder- bremsen.

Ein Fahrzeugsitz 1 für ein Kraftfahrzeug weist ein Sitzteil 3 und eine relativ zum Sitzteil 3 in ihrer Neigung einstellbare Lehne 4 auf. Ein für die Neigungseinstellung manuell zu betätigendes Handrad 5 auf einer Seite des Fahrzeugsitzes 1 dreht eine nicht näher dargestellte Antriebswelle, welche horizontal im Übergangsbereich zwischen Sitzteil 3 und Lehne 4 angeordnet ist und auf beiden Seiten des Fahrzeugsitzes 1 drehfest in je einen Beschlag 10 eingreift. Die Lehne 4 ist mittels der beiden Beschläge 10 mit dem Sitzteil 3 verbunden.

Der Beschlag 10 ist als Getriebebeschlag ausgebildet, bei welchem ein erstes Beschlagteil 11 und ein zweites Beschlagteil 12 über ein als Exzenterumlaufgetriebe ausgebildetes Getriebe zum Verstellen und Feststellen miteinander verbunden sind. Die beiden Beschlagteile 11 und 12 weisen eine im wesentlichen flache Form auf und bestehen aus Stahl. Das erste Beschlagteil 11 ist fest mit der das Handrad 5 und die Antriebswelle lagernden Struktur (vorliegend der Struktur der Lehne 4) verbunden, weshalb im Ausführungsbeispiel das erste Bauteil 11 lehnenfest und daher in der Zeichnung oben dargestellt ist. Entsprechend ist das zweite Beschlagteil 12 im Ausführungsbeispiel sitzteilfest, d.h. mit der Struktur des Sitzteiles 3 verbunden, und in der Zeichnung unten dargestellt. Die Positionen der Beschlagteile 11 und 12 können je nach Anforderung ausgetauscht sein, d.h. die Richtung des Kraftflusses durch den Beschlag 10 hindurch kann gegenüber der vorgenannten Anordnung der Beschlagteile 11 und 12 entgegengesetzt sein. Die nachfolgend verwendeten Begriffe "lagern" und "abstützen" sollen daher für die Richtung des Kraftflusses nicht einschränkend sein.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17 am Zahnrad 16. Das erste Beschlagteil 11 weist auf der dem Zahnrad 16 zugewandten Seite konzentrisch zur Innenverzahnung des Zahnkranzes 17 einen angeformten Kragenzug 19 auf.

Insoweit stimmen alle Ausführungsbeispiele überein. Im folgenden sind zunächst das erste und das zweite Ausführungsbeispiel gemeinsam beschrieben.

Im Kragenzug 19 ist mit Spiel ein Mitnehmer 21 mittels einer Nabe 22 gelagert. Der aus Kunststoff bestehende Mitnehmer 21, durch dessen Anordnung die verwendeten Richtungsangaben definiert sind, ist zentral mit einer zu einem Keilwellenprofil der Antriebswelle passenden, axial verlaufenden Bohrung 23 versehen. Ferner weist der Mitnehmer 21 ein angeformtes Mitnehmersegment 25 auf, welches bogenförmig um einen Teil des Kragenzuges 19 herum angeordnet ist. Auf dem Kragenzug 19 sind wenigstens indirekt mit ihrer gekrümmten Innenseite zwei Keilsegmente 27a und 27b abgestützt, die mit ihren gekrümmten Außenseiten ein in das zweite Beschlagteil 12 drehfest eingepresstes erstes Gleitlager 28 lagern. Die Reibung zwischen der Außenseite der metallischen Keilsegmente 27a und 27b und der Innenseite des buchsenförmigen ersten Gleitlagers 28 ist deutlich geringer als es die direkte Reibung zwischen den Keilsegmenten 27a und 27b und den Beschlagteilen 11 oder 12 wäre.

Das Mitnehmersegment 25 fasst mit Spiel zwischen die Schmalseiten der Keilsegmente 27a und 27b, während die einander zugekehrten Breitseiten der Keilsegmente 27a und 27b jeweils einen abgewinkelten Endfinger einer ringförmig aufgewickelten Feder, im folgenden als Omegafeder 30 bezeichnet, abstützen. Die Omegafeder 30 drückt die Keilsegmente 27a und 27b in Umfangsrichtung auseinander und stellt damit den Beschlag 10 im Ruhezustand spielfrei. Der Mitnehmer 21 wird auf der Außenseite des ersten Beschlagteils 11 durch einen aufgeclipsten Sicherungsring 31 axial gesichert. Zur Aufnahme der axial wirkenden Kräfte ist in an sich bekannter Weise an den beiden Beschlagteilen 11 und 12 je ein in der Zeichnung nicht dargestelltes Halteblech angeschweißt, welches das jeweils andere Beschlagteil übergreift, ohne die Einstellbewegung zu behindern.

Durch die Keilsegmente 27a und 27b wird ein Exzenter definiert, welcher im Kraftfluss zwischen den Beschlagteilen 11 und 12 liegt und an diesen gelagert ist. Das Mitnehmersegment 25, welches auch zum Exzenter gerechnet werden kann, liegt außerhalb des Kraftflusses. Der Exzenter drückt in Verlängerung der Richtung der Exzentrizität das Zahnrad 16 und den Zahnkranz 17 an einer so definierten Eingriffsstelle ineinander. Bei einem Antrieb durch die sich drehende Antriebswelle wird ein Drehmoment zunächst auf den Mitnehmer 21 und dann auf den so definierten Exzenter übertragen, welcher entlang des ersten Gleitlagers 28 gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Aufgrund des Gewichts der üblicherweise schräg stehenden Lehne 4 und eines vom Insassen ausgeübten Druckes auf die Lehne 4 kann bei den Keilsegmenten 27a und 27b zwischen einem höher belasteten ersten Keilsegment 27a, das bei einer Aufwärtsbewegung der Lehne 4 voreilt, und einem geringer belasteten zweiten Keilsegment 27b unterschieden werden. Der Wirkungsgrad des Beschlags 10 hängt merklich von der Reibung zwischen dem ersten Keilsegment 27a und dem Kragenzug 19 ab. Erfindungsgemäß ist zur Verringerung dieser Reibung ein zweites Gleitlager 41 vorgesehen, das praktisch unbeweglich (haftend) am ersten Keilsegment 27a sitzt und mit geringer Reibung auf dem Kragenzug 19 gleitet, also funktionell dem ersten Gleitlager 28 entspricht.

Im ersten Ausführungsbeispiel ist das zweite Gleitlager 41 als Ringsegment ausgebildet, welches sich über etwas weniger als die Innenseite des ersten Keilsegmentes 27a erstreckt, während im zweiten Ausführungsbeispiel das zweite Gleitlager 41 als nahezu vollständig geschlossener Ring ausgebildet ist, auf welchem auch das geringer belastete zweite Keilsegment 27b sitzt. Da ansonsten - bis auf geometrische Anpassungen an die Form des zweites Gleitlagers 41 - die beiden Ausfiihrungsbeispiele übereinstimmen, tragen gleiche und gleichwirkende Bauteile gleiche Bezugszeichen. In einer Abwandlung zu beiden Ausführungsbeispielen ist das zweite Gleitlager 41 auf der Innenseite des Kragenzuges 19 in einem von der Nabe 22 freien Bereich angeordnet und das stärker belastete erste Keilsegment 27a hierin mittels eines Auslegers gelagert.

Die Reibung zwischen dem ersten Keilsegment 27a und dem Kragenzug 19 hat nicht nur einen Einfluss auf den Wirkungsgrad, sondern auch auf die Selbsthemmung des Getriebes des Beschlags 10. Damit wenigstens einer der beiden Beschläge 10 des Fahrzeugsitzes 1 trotz der zweiseitigen Gleitlagerung des ersten Keilsegmentes 27a selbsthemmend bleibt und im Ruhezustand gegen abtriebsseitig eingeleitete Drehmomente sperrt, ist erfindungsgemäß bei diesem Beschlag 10 eine im Ruhezustand des Beschlags 10 wirksame Bremse vorgesehen, nämlich eine Schlingfederbremse 44, welche in einer Schlingfederbuchse 46 angeordnet und aufgrund ihrer Vorspannung reibschlüssig an deren Innenwand anliegt. Die beispielsweise aus einer Aluminiumlegierung oder aus Kunststoff hergestellte Schlingfederbuchse 46 ist drehfest am zweiten Beschlagteil 12 angeordnet, indem drei um je 120° zueinander versetzte Dreier-Gruppen von radial (und/oder axial) abstehenden Schlingfederbuchsenarmen 48 formschlüssig in die auf der Rückseite des Zahnrades 16 durch den Prägevorgang entstandene Innenverzahnung greifen.

Zum Ansteuern weist die Schlingfederbremse 44 an ihren Enden je einen radial nach innen ragenden Schlingfederarm 50 auf. Das erste Keilsegment 27a ist mit einem axial abstehenden Steuernocken 51 versehen, welcher mit Spiel in Umfangsrichtung zwischen den beiden Schlingfederarmen 50 angeordnet ist. Unter "zwischen" oder "innerhalb" soll jeweils eine Anordnung verstanden werden, die sich auf den kleineren der beiden möglichen Winkelbereiche in Umfangsrichtung bezieht, während "außerhalb" sich auf den größeren der beiden möglichen Winkelbereiche in Umfangsrichtung bezieht. Eine Anlage des Steuernockens 51 an einen Schlingfederarm 50 mit anschließendem Beaufschlagen des letzteren wirkt schließend auf die Schlingfederbremse 44, d.h. die Schlingfederbremse 44 bremst - aufgrund eines sich vergrößernden Außendurchmessers derselben und einer verstärkten Reibung an der Schlingfederbuchse 46 - und verhindert eine Drehung der den Exzenter definierenden Bauteile relativ zum zweiten Beschlagteil 12. Mit der Blockade des Exzenters ist auch das erste Beschlagteil 11 relativ zum zweiten Beschlagteil 12 fixiert.

Um die Bremswirkung der Schlingfederbremse 44 beim Antrieb des Mitnehmers 21 aufzuheben, ist am Mitnehmer 21 einerseits an dem Ende des Mitnehmersegmentes 25, welches dem ersten Keilsegment 27a zugeordnet ist, ein erster Mitnehmernocken 53 und andererseits in dem Bereich, der zwischen den Enden des Mitnehmersegmentes 25 mit etwa gleichem radialen Abstand angeordnet ist, ein zweiter Mitnehmernocken 55 vorgesehen, welche beide axial abstehen. Zwischen (im Sinne der obigen Definition) den beiden Mitnehmernocken 53 und 55 sind mit Spiel die Schlingfederarme 50 samt dem Steuernocken 51 angeordnet, d.h. die Mitnehmernocken 53 und 55 sind in Umfangsrichtung außerhalb der Schlingfederarme 50 angeordnet. Wenn der Mitnehmer 21 gedreht wird, gelangt zunächst einer der Mitnehmernocken 53 oder 55 in Anlage an einen Schlingfederarm 50 und beaufschlagt den letzteren, was öffnend (lösend) auf die Schlingfederbremse 44 wirkt - aufgrund eines sich leicht verringernden Außendurchmessers derselben mit verringerter Reibung an der Schlingfederbuchse 46 - und die Bremswirkung aufhebt. Im weiteren Verlauf treibt der Exzenter die oben beschriebene Abwälzbewegung der Beschlagteile 11 und 12 aneinander an.

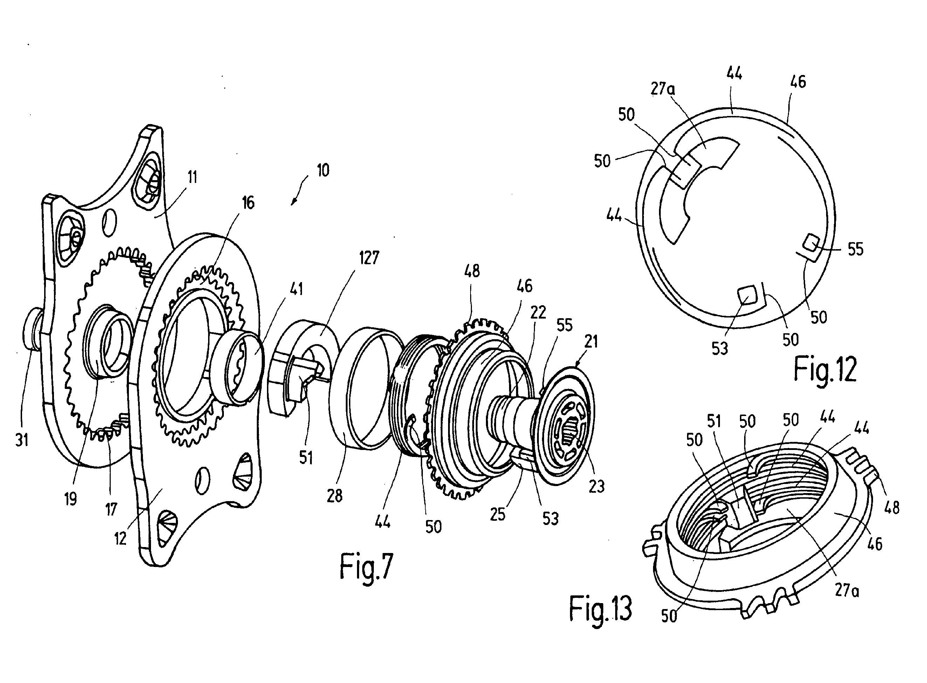

Das dritte Ausführungsbeispiel gemäß Fig. 7 gleicht den vorherigen Ausfiihrungsbeispielen, insbesondere dem zweiten Ausführungsbeispiel, soweit nachfolgend nicht abweichend beschrieben, weshalb gleiche oder im wesentlichen gleiche Bauteile gleiche Bezugszeichen tragen.

In dem Kragenzug 19 des ersten Beschlagteils 11 ist der unverändert ausgebildete Mitnehmer 21 gelagert, während auf dem Kragenzug 19 (d.h. auf dessen Außenseite) ein Sichelsegment 127 abgestützt ist, welches sichelförmig um einen Teil des Kragenzuges 19 herum angeordnet ist und mit seiner gekrümmten Außenseite das in das zweite Beschlagteil 12 drehfest eingepresste erste Gleitlager 28 lagert. Von seiner Form und Funktion her entspricht das Sichelsegment 127 einer einstückigen Kombination der beiden Keilsegemente 27a und 27b. Das Mitnehmersegment 25 fasst mit Spiel zwischen die Schmalseiten des Sichelsegments 127. Der Sicherungsring 31 und die in der Zeichnung nicht dargestellten Haltebleche entsprechen den vorherigen Ausführungsbeispielen.

Durch das Sichelsegment 127 wird ein Exzenter definiert, welcher im Kraftfluss zwischen den Beschlagteilen 11 und 12 liegt und an diesen gelagert ist. Der Exzenter drückt in Verlängerung der Richtung der Exzentrizität das Zahnrad 16 und den Zahnkranz 17 an einer so definierten Eingriffsstelle ineinander. Bei einem Antrieb durch die sich drehende Antriebswelle wird ein Drehmoment zunächst auf den Mitnehmer 21 und dann auf den so definierten Exzenter übertragen, welcher entlang des ersten Gleitlagers 28 gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Analog zu den vorherigen Ausführungsbeispielen hängt der Wirkungsgrad des Beschlags 10 merklich von der Reibung zwischen dem Sichelsegment 127 und dem Kragenzug 19 ab. Wie im zweiten Ausführungsbeispiel ist zur Verringerung dieser Reibung das zweite Gleitlager 41 vorgesehen, welches als nahezu vollständig geschlossener Ring ausgebildet ist. Das zweite Gleitlager 41 ist entweder unbeweglich auf dem Kragenzug 19 montiert, beispielsweise in geschlitzter Ausführung gepresst oder in geschlossener Ausführung haftend, und lässt das Sichelsegement 127 mit geringer Reibung entlang gleiten, oder das zweite Gleitlager 41 sitzt praktisch unbeweglich (haftend) am Sichelsegment 127 und gleitet mit geringer Reibung auf dem Kragenzug 19, entspricht jeweils also funktionell dem ersten Gleitlager 28.

Damit der Beschlag 10 im Ruhezustand selbsthemmend bleibt und gegen abtriebsseitig eingeleitete Drehmomente sperrt, ist wiederum die Schlingfederbremse 44 vorgesehen. Die sie aufnehmende und reibschlüssig haltende Schlingfederbuchse 46 weist rundum radial abstehende Schlingfederbuchsenarme 48 auf, was auch bei den beiden vorherigen Ausführungsbeispielen so verwirklicht sein kann. Die Schlingfederbuchsenarme 48 greifen formschlüssig in die auf der Rückseite des Zahnrades 16 durch den Prägevorgang entstandene Innenverzahnung.

Zum Ansteuern weist die Schlingfederbremse 44 wiederum die beiden Schlingfederarme 50 auf, während das Sichersegment 127 mit dem axial abstehenden Steuernocken 51 versehen ist, welcher zwischen den beiden Schlingfederarmen 50 angeordnet ist. Es gilt die vorgenannte Definition für "zwischen", "innerhalb" und "außerhalb". Eine Anlage des Steuernockens 51 an einen Schlingfederarm 50 mit anschließendem Beaufschlagen des letzteren wirkt schließend auf die Schlingfederbremse 44. Um die Bremswirkung der Schlingfederbremse 44 beim Antrieb des Mitnehmers 21 aufzuheben, ist am Mitnehmer 21 wieder ein erster Mitnehmemocken 53 und ein zweiter Mitnehmemocken 55 vorgesehen, welche zwischen sich die Schlingfederarme 50 aufnehmen. Wenn der Mitnehmer 21 gedreht wird, gelangt zunächst einer der Mitnehmernocken 53 oder 55 in Anlage an einen Schlingfederarm 50 und beaufschlagt den letzteren, was öffnend (lösend) auf die Schlingfederbremse 44 wirkt und die Bremswirkung aufhebt. Im weiteren Verlauf treibt der Exzenter die oben beschriebene Abwälzbewegung der Beschlagteile 11 und 12 aneinander an.

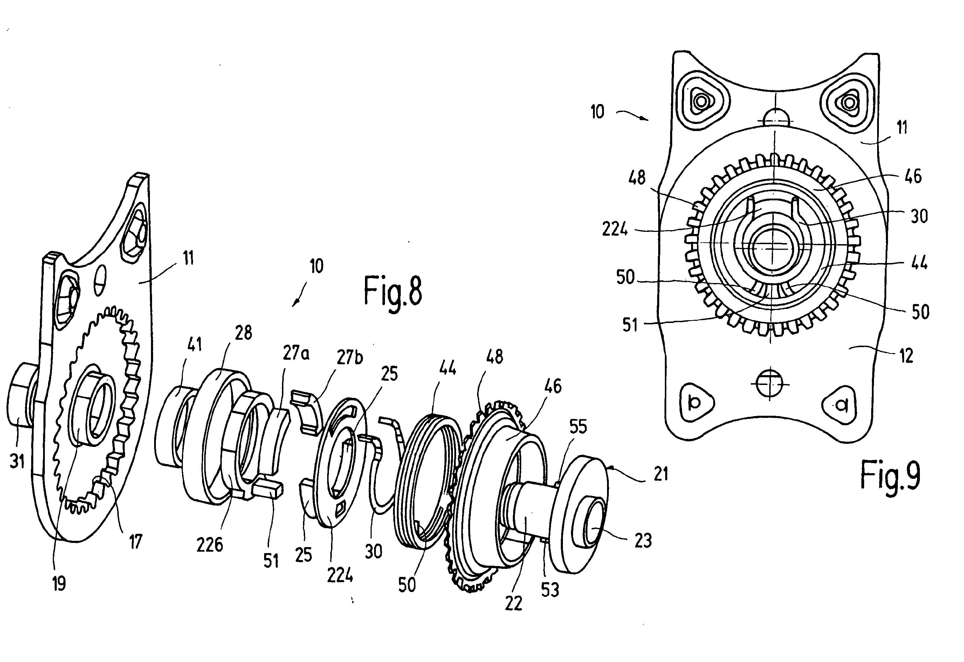

Das vierte Ausführungsbeispiel gemäß den Figuren 8 und 9 gleicht den vorherigen Ausführungsbeispielen, insbesondere dem zweiten Ausführungsbeispiel, soweit nachfolgend nicht abweichend beschrieben, weshalb gleiche oder im wesentlichen gleiche Bauteile gleiche Bezugszeichen tragen.

Der Mitnehmer 21 besteht zum einen aus einer Nabe 22 zur Lagerung mit Spiel im Kragenzug 19 des ersten Beschlagteils 11 und zur Aufnahme der Antriebswelle in einer zentralen Bohrung 23, wobei die Nabe 22 an der nach außen weisenden Stirnseite eine Abdeckscheibe aufweist. Zum anderen besteht der Mitnehmer 21 aus einer gesondert ausgebildeten, drehfest mit der Nabe 22 verbundenen, gelochten Mitnehmerscheibe 224 mit zwei angeformten Mitnehmersegmenten 25 auf, welche halbkreisförmig um einen Teil des Kragenzuges 19 herum angeordnet sind und zwischen sich einen Spalt aufweisen. Auf dem Kragenzug 19 ist ein Exzenterring 226 abgestützt, auf dem wiederum mit ihrer gekrümmten Innenseite die zwei Keilsegmente 27a und 27b abgestützt sind, die mit ihren gekrümmten Außenseiten ein in das zweite Beschlagteil 12 drehfest eingepresstes erstes Gleitlager 28 lagern. Die Reibungsverhältnisse sind wie in den vorherigen Ausführungsbeispielen.

Die beiden Mitnehmersegmente 25 fassen mit Spiel zwischen die Schmalseiten der Keilsegmente 27a und 27b, während die einander zugekehrten Breitseiten der Keilsegmente 27a und 27b jeweils einen abgewinkelten Endfinger einer Omegafeder 30 abstützen, wobei die Omegafeder 30 auf der anderen Seite der Mitnehmerscheibe 224 angeordnet ist und die Endfinger durch eine Kulisse der Mitnehmerscheibe 224 greifen. Die Omegafeder 30 drückt die Keilsegmente 27a und 27b in Umfangsrichtung auseinander und stellt damit den Beschlag 10 im Ruhezustand spielfrei. Der Sicherungsring 31 und die in der Zeichnung nicht dargestellten Haltebleche entsprechen den vorherigen Ausführungsbeispielen.

Durch die Keilsegmente 27a und 27b und den Exzenterring 226 wird ein Exzenter definiert, welcher im Kraftfluss zwischen den Beschlagteilen 11 und 12 liegt und an diesen gelagert ist. Der Exzenter drückt in Verlängerung der Richtung der Exzentrizität das Zahnrad 16 und den Zahnkranz 17 an einer so definierten Eingriffsstelle ineinander. Bei einem Antrieb durch die sich drehende Antriebswelle wird ein Drehmoment zunächst auf den Mitnehmer 21 und dann auf den so definierten Exzenter übertragen, welcher entlang des ersten Gleitlagers 28 gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Analog zu den vorherigen Ausführungsbeispielen hängt der Wirkungsgrad des Beschlags 10 merklich von der Reibung zwischen dem Exzenterring 226 und dem Kragenzug 19 ab. Wie im zweiten Ausführungsbeispiel ist zur Verringerung dieser Reibung das zweite Gleitlager 41 vorgesehen, welches als nahezu vollständig geschlossener Ring ausgebildet ist. Das zweite Gleitlager 41 ist entweder auf den Kragenzug 19 gepresst und lässt den Exzenterring 226 mit geringer Reibung entlang gleiten, oder das zweite Gleitlager 41 sitzt praktisch unbeweglich am Exzenterring 226 und gleitet mit geringer Reibung auf dem Kragenzug 19, entspricht jeweils also funktionell dem ersten Gleitlager 28.

Damit der Beschlag 10 im Ruhezustand selbsthemmend bleibt und gegen abtriebsseitig eingeleitete Drehmomente sperrt, ist wiederum die Schlingfederbremse 44 vorgesehen. Die sie aufnehmende und reibschlüssig haltende Schlingfederbuchse 46 weist rundum radial abstehende Schlingfederbuchsenarme 48 auf. Die Schlingfederbuchsenarme 48 greifen formschlüssig in die auf der Rückseite des Zahnrades 16 durch den Prägevorgang entstandene Innenverzahnung.

Zum Ansteuern weist die Schlingfederbremse 44 wiederum die beiden Schlingfederarme 50 auf, während der Exzenterring 226 mit dem axial abstehenden Steuernocken 51 versehen ist, welcher durch eine Öffnung in der Mitnehmerscheibe 224 greift und in Umfangsrichtung zwischen den beiden Schlingfederarmen 50 angeordnet ist. Es gilt die vorgenannte Definition für "zwischen", "innerhalb" und "außerhalb". Eine Anlage des Steuernockens 51 an einen Schlingfederarm 50 mit anschließendem Beaufschlagen des letzteren wirkt schließend auf die Schlingfederbremse 44. Um die Bremswirkung der Schlingfederbremse 44 beim Antrieb des Mitnehmers 21 aufzuheben, ist an der Nabe 22 wieder ein erster Mitnehmemocken 53 und ein zweiter Mitnehmernocken 55 vorgesehen, welche zwischen sich die Schlingfederarme 50 aufnehmen. Wenn der Mitnehmer 21 gedreht wird, gelangt zunächst einer der Mitnehmernocken 53 oder 55 in Anlage an einen Schlingfederarm 50 und beaufschlagt den letzteren, was öffnend (lösend) auf die Schlingfederbremse 44 wirkt und die Bremswirkung aufhebt. Im weiteren Verlauf treibt der Exzenter die oben beschriebene Abwälzbewegung der Beschlagteile 11 und 12 aneinander an.

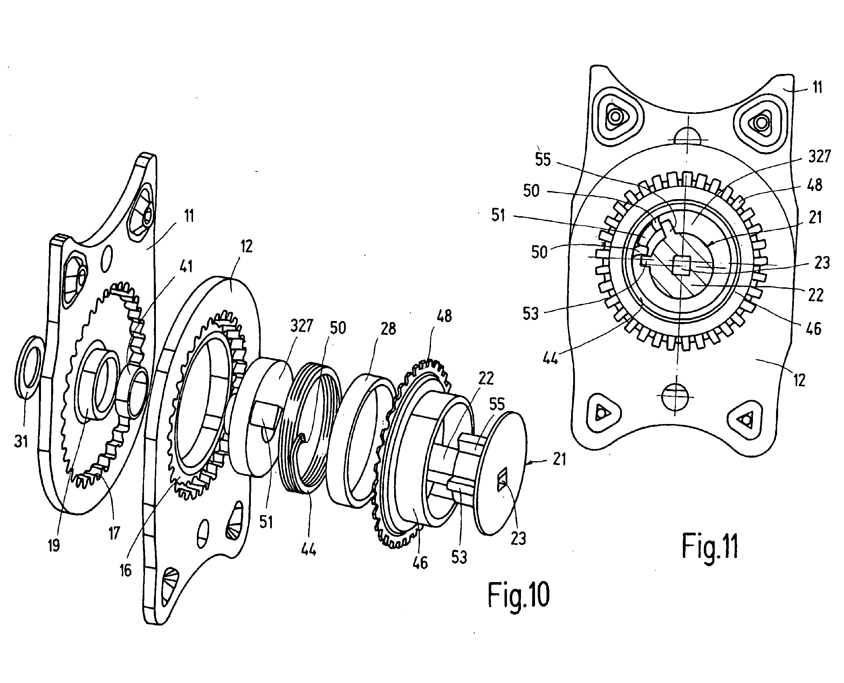

Das fünfte Ausführungsbeispiel gemäß den Figuren 10 und 11 gleicht den vorherigen Ausführungsbeispielen, insbesondere dem dritten Ausführungsbeispiel, soweit nachfolgend nicht abweichend beschrieben, weshalb gleiche oder im wesentlichen gleiche Bauteile gleiche Bezugszeichen tragen.

Ein Festexzenter 327 weist einen zylinderscheibenförmigen Grundkörper, welcher mit seiner Außenseite das in das zweite Beschlagteil 12 drehfest eingepresste erste Gleitlager 28 lagert, und eine exzentrisch zur Mitte der Grundform angeordnete, angeformte Nabe auf, welche mittels des zweiten Gleitlagers 41 im Kragenzug 19 des ersten Beschlagteils 11 gelagert ist. Das zweite Gleitlager 41 ist beispielsweise in den Kragenzug 19 gepresst und lässt den Festexzenter 327 mit geringer Reibung entlang gleiten (und ist dabei als geschlossener Ring ausgebildet) oder sitzt praktisch unbeweglich am Festexzenter 327 und gleitet mit geringer Reibung im Kragenzug 19 (und ist dabei als nahezu vollständig geschlossener Ring ausgebildet). Das zweite Gleitlager 41 entspricht jeweils funktionell dem ersten Gleitlager 28 und beeinflusst aufgrund der verringerten Reibung den Wirkungsgrad des Beschlags 10 analog zu den vorherigen Ausführungsbeispielen.

Der Mitnehmer 21 ist mittels seiner Nabe 22 drehbar innerhalb der hohlen Nabe des Festexzenters 327 gelagert und mit einem Leerweg auf Mitnahme gekoppelt, d.h. der Mitnehmer 21 nimmt den Festexzenter 327 nach Durchfahren des Leerwegs in Umfangsrichtung mit. Der Sicherungsring 31 und die in der Zeichnung nicht dargestellten Haltebleche entsprechen den vorherigen Ausführungsbeispielen.

Der Festexzenter 327 bildet einen Exzenter, welcher im Kraftfluss zwischen den Beschlagteilen 11 und 12 liegt und an diesen gelagert ist. Der Exzenter drückt in Verlängerung der Richtung der Exzentrizität das Zahnrad 16 und den Zahnkranz 17 an einer so definierten Eingriffsstelle ineinander. Bei einem Antrieb durch die sich drehende Antriebswelle wird ein Drehmoment zunächst auf den Mitnehmer 21 und dann auf den so definierten Exzenter übertragen, welcher entlang des ersten Gleitlagers 28 gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Damit der Beschlag 10 im Ruhezustand selbsthemmend bleibt und gegen abtriebsseitig eingeleitete Drehmomente sperrt, ist wiederum eine Schlingfederbremse 44 vorgesehen. Die sie aufnehmende und reibschlüssig haltende Schlingfederbuchse 46 weist rundum radial abstehende Schlingfederbuchsenarme 48 auf. Die Schlingfederbuchsenarme 48 greifen formschlüssig in die auf der Rückseite des Zahnrades 16 durch den Prägevorgang entstandene Innenverzahnung.

Zum Ansteuern weist die Schlingfederbremse 44 wiederum die beiden Schlingfederarme 50 auf, während der Festexzenter 327 mit dem axial abstehenden Steuernocken 51 versehen ist, welcher zwischen den beiden Schlingfederarmen 50 angeordnet ist. Es gilt die vorgenannte Definition für "zwischen", "innerhalb" und "außerhalb". Eine Anlage des Steuernockens 51 an einen Schlingfederarm 50 mit anschließendem Beaufschlagen des letzteren wirkt schließend auf die Schlingfederbremse 44. Um die Bremswirkung der Schlingfederbremse 44 beim Antrieb des Mitnehmers 21 aufzuheben, ist am Mitnehmer 21 wieder ein erster Mitnehmernocken 53 und ein zweiter Mitnehmernocken 55 vorgesehen, welche zwischen sich die Schlingfederarme 50 aufnehmen. Wenn der Mitnehmer 21 gedreht wird, gelangt zunächst einer der Mitnehmernocken 53 oder 55 in Anlage an einen Schlingfederarm 50 und beaufschlagt den letzteren, was öffnend (lösend) auf die Schlingfederbremse 44 wirkt und die Bremswirkung aufhebt. Im weiteren Verlauf treibt der Exzenter die oben beschriebene Abwälzbewegung der Beschlagteile 11 und 12 aneinander an.

Zu allen Ausführungsbeispielen ist eine Abwandlung möglich, gemäß welcher je eine Schlingfederbremse 44 pro Drehrichtung vorgesehen ist, die entgegengesetzt schließend sind. Von jeder Schlingfederbremse 44 ist dann je ein Schlingfederarm 50 am ersten Keilsegment 27a, Sichelsegment 127, Festexzenter 327 oder dem jeweiligen Steuernocken 51 eingehängt oder anderweitig angebracht, vorzugsweise spielfrei, während die beiden anderen Schlingfederarme 50 von je einem Mitnehmernocken 53 oder 55 - nach Durchfahren eines kleinen Leerwegs - beaufschlagt werden, was in Fig. 12 schematisch dargestellt ist. Beim Antreiben des Mitnehmers 21 wird eine der beiden Schlingfederbremsen 44 durch den Mitnehmernocken 53 oder 55 und die andere durch das erste Keilsegment 27a etc. geöffnet (gelöst). Vorzugsweise sind die beiden Schlingfederbremsen 44 axial nebeneinander in der gleichen Schlingfederbuchse 46 angeordnet, was in Fig. 13 dargestellt ist.

Zu allen Ausführungsbeispielen ist eine weitere Abwandlung möglich, gemäß welcher die Schlingfederbuchse einstückig mit dem zweiten Beschlagteil 12 ausgebildet ist, indem der Materialbereich, welcher die Lageröffnung zur Aufnahme des ersten Gleitlagers 28 bildet, in der Art eines Kragenzuges axial etwas verlängert ist und mit seiner Außenseite, d.h. seiner von der lagernden Seite abgewandten Rückseite, die Schlingfederbremse 44 aufnimmt.

Mit der Anordnung der Schlingfederbremse 44 auf der Außenseite der Schlingfederbuchse kehrt sich die Funktionsweise der Schlingfederbremse 44 um, d.h. eine Vergrößerung des Durchmesser wirkt öffnend (lösend), während ein Zusammenziehen mit Verringerung des Durchmessers schließend (bremsend) wirkt. Entsprechend sind am ersten Keilsegment 27a, Sichelsegment 127 oder Festexzenter 327 zwei radial nach außen ragende Steuernocken 51 vorgesehen, welche zwischen sich (im Sinne der vorgenannte Definition für "zwischen", "innerhalb" und "außerhalb") die Schlingfederarme 50 aufnehmen, zwischen welchen dann der Mitnehmernocken 53 angeordnet ist. Bei zwei Keilsegmenten 27a und 27b ist die bereits genannte Lagerung der ersten Keilsegments 27a mittels eines Auslegers im Kragenzug 19 (auf dessen Innenseite) und des zweiten Keilsegments 27b auf dem Kragenzug 19 (auf dessen Außenseite).

### Bezugszeichenliste

- 1: Fahrzeugsitz
- 3: Sitzteil
- 4: Lehne
- 5: Handrad
- 10: Beschlag
- 11: erstes Beschlagteil
- 12: zweites Beschlagteil
- 16: Zahnrad
- 17: Zahnkranz
- 19: Kragenzug
- 21: Mitnehmer
- 22: Nabe
- 23: Bohrung
- 25: Mitnehmersegment
- 27a: erstes Keilsegment
- 27b: zweites Keilsegment
- 28: erstes Gleitlager
- 30: Omegafeder
- 31: Sicherungsring
- 41: zweites Gleitlager
- 44: Schlingfederbremse
- 46: Schlingfederbuchse
- 48: Schlingfederbuchsenarme
- 50: Schlingfederarm
- 51: Steuernocken
- 53: erster Mitnehmernocken
- 55: zweiter Mitnehmernocken
- 127: Sichelsegment
- 224: Mitnehmerscheibe
- 226: Exzenterring
- 327: Festexzenter

## Patentansprüche

1. Beschlag für einen Fahrzeugsitz, insbesondere für einen Kraftfahrzeugsitz, mit einem ersten Beschlagteil (11), einem mit dem ersten Beschlagteil (11) in Getriebeverbindung stehenden zweiten Beschlagteil (12), einem an den Beschlagteilen (11,12) drehbar gelagerten Exzenter (27a, 27b; 127; 327) zum Antrieb einer Abwälzbewegung von erstem Beschlagteil (11) und zweitem Beschlagteil (12), einem Mitnehmer (21) zum Antrieb des Exzenters (27a, 27b; 127; 327) und einer Bremse zum Sperren des Beschlags (10) gegen abtriebsseitig eingeleitete Drehmomente im Ruhezustand, **dadurch gekennzeichnet, dass** als Bremse wenigstens eine Schlingfederbremse (44) vorgesehen ist, welche der Mitnehmer (21) und/oder der Exzenter (27a, 27b; 127; 327) ansteuern, und dass als Gegenstück für die Bremswirkung eine Schlingfederbuchse (46) vorgesehen ist, an welcher die Schlingfederbremse (44) anliegt, wobei die Schlingfederbuchse (46) drehfest zum zweiten Beschlagteil (12) ist oder einstückig mit dem zweiten Beschlagteil (12) ausgebildet ist.

2. Beschlag nach Anspruch 1, **dadurch gekennzeichnet, dass** zum Ansteuern die Schlingfederbremse (44) zwei Schlingfederarme (50) aufweist.

3. Beschlag nach einem der vorhergehenden Ansprüche, **dadurch gekennzeichnet, dass** der Mitnehmer (21) öffnend auf die Schlingfederbremse (44) wirkt und diese beim Antrieb löst.

4. Beschlag nach Anspruch 2 und 3, **dadurch gekennzeichnet, dass** der Mitnehmer (21) wenigstens einen Mitnehmernocken (53, 55) aufweist, welcher bei Anlage an einen Schlingfederarm (50) und Beaufschlagen des letzteren öffnend auf die Schlingfederbremse (44) wirkt.

5. Beschlag nach einem der vorhergehenden Ansprüche, **dadurch gekennzeichnet, dass** der Exzenter (27a, 27b; 127; 327) schließend auf die Schlingfederbremse (44) wirkt.

6. Beschlag nach Anspruch 2 und 5, **dadurch gekennzeichnet, dass** der Exzenter (27a, 27b; 127; 327) einen Steuernocken (51) aufweist, welcher bei Anlage an einen Schlingfederarm (50) und Beaufschlagen des letzteren schließend auf die Schlingfederbremse (44) wirkt.

7. Beschlag nach einem der Ansprüche 1 bis 6, **dadurch gekennzeichnet, dass** die gesondert ausgebildete Schlingfederbuchse (46) mehrere radial abstehende Schlingfederbuchsenarme (48) aufweist, welche formschlüssig in eine Innenverzahnung des zweiten Beschlagteils (12) greifen.

8. Beschlag nach einem der Ansprüche 1 bis 6, **dadurch gekennzeichnet, dass** als einstückig ausgebildete Schlingfederbuchse ein der Lagerung des Exzenters (27a, 27b; 127; 327) dienender Kragenzug mit seiner von der lagernden Seite abgewandten Rückseite dient.

9. Beschlag nach einem der vorhergehenden Ansprüche, **dadurch gekennzeichnet, dass** die Schlingfederbremse (44) baulich in den Beschlag (10) integriert ist.

10. Beschlag nach einem der vorhergehenden Ansprüche, **dadurch gekennzeichnet, dass** der Exzenter (27a, 27b; 127; 327) sowohl am ersten Beschlagteil (11) als auch am zweiten Beschlagteil (12) mit geringer Reibung gelagert ist, insbesondere mittels eines Gleitlagers (28, 41) und/oder Wälzlagers und/oder einer Oberflächenbearbeitung und/oder Oberflächenbehandlung.

11. Beschlag nach einem der vorhergehenden Ansprüche, **dadurch gekennzeichnet, dass** der Exzenter (27a, 27b; 127; 327) wenigstens durch zwei Keilsegmente (27a, 27b) oder durch ein Sichelsegment (127) definiert ist oder als Festexzenter (327) ausgebildet ist.

12. Beschlag nach einem der vorhergehenden Ansprüche, **dadurch gekennzeichnet, dass** für beide Drehrichtungen des Mitnehmers (21) je eine Schlingfederbremse (44) vorgesehen ist.

13. Winkeleinstellbare Sitzkomponente (3, 4) eines Fahrzeugsitzes, insbesondere Kraftfahrzeugsitzes, mit einem Beschlag (10) nach einem der vorhergehenden Ansprüche zur Einstellung eines Winkels innerhalb der Sitzkomponente (3, 5) oder relativ zu einer anderen Sitzkomponente (3, 4).

14. Fahrzeugsitz, insbesondere Kraftfahrzeugsitz, mit wenigstens einer winkeleinstellbaren Sitzkomponente (3, 4) nach Anspruch 13.

## Claims

1. A fitting for a vehicle seat, in particular for a motor vehicle seat, with a first fitting part (11), a second fitting part (12) in geared connection with the first fitting part (11), an eccentric (27a, 27b; 127; 327) which is mounted rotatably on the fitting parts (11, 12) and is intended for driving a rolling movement of first fitting part (11) and second fitting part (12), a driver (21) for driving the eccentric (27a, 27b; 127; 327) and a brake for locking the fitting (10) in the inoperative state against torques introduced on the output side, **characterized in that** at least one wrap spring brake (44) is provided as the brake and is activated by the driver (21) and/or the eccentric (27a, 27b; 127; 327) and that, as a counter part for the braking effect, a wrap spring bushing (46) is provided, against which the wrap spring brake (44) bears, the wrap spring bushing being rotationally fixed with respect to the second fitting part (12) or being formed integrally with the second fitting part (12).

2. The fitting as claimed in claim 1, **characterized in that**, for activation, the wrap spring brake (44) has two wrap spring arms (50).

3. The fitting as claimed in one of the preceding claims, **characterized in that** the driver (21) acts on the wrap spring brake (44) in an opening manner and releases the latter during driving.

4. The fitting as claimed in claims 2 and 3, **characterized in that** the driver (21) has at least one driver cam (53, 55) which, upon bearing against a wrap spring arm (50) and acting upon the latter, acts on the wrap spring brake (44) in an

5. The fitting as claimed in one of the preceding claims, **characterized in that** the eccentric (27a, 27b; 127; 327) acts on the wrap spring brake (44) in a closing manner.

6. The fitting as claimed in claims 2 and 5, **characterized in that** the eccentric (27a, 27b; 127; 327) has a control cam (51) which, upon bearing against a wrap spring arm (50) and acting upon the latter, acts on the wrap spring brake (44) in a closing manner.

7. The fitting as claimed in one of claims 1 to 6, **characterized in that** the separately formed wrap spring bushing (46) has a plurality of radially protruding wrap spring bushing arms (48) which engage with a positive fit in an inner toothing of the second fitting part (12).

8. The fitting as claimed in one of claims 1 to 6, **characterized in that** a collar extension, which serves to support the eccentric (27a, 27b; 127; 327), serves with its rear side, which faces away from the supporting side, as the integrally formed wrap spring bushing.

9. The fitting as claimed in one of the preceding claims, **characterized in that** the wrap spring brake (44) is integrated structurally into the fitting (10).

10. The fitting as claimed in one of the preceding claims, **characterized in that** the eccentric (27a, 27b; 127; 327) is mounted with little friction both on the first fitting part (11) and on the second fitting part (12), in particular by means of a sliding bearing (28, 41) and/or rolling bearing and/or surface processing and/or surface treatment.

11. The fitting as claimed in one of the preceding claims, **characterized in that** the eccentric (27a, 27b; 127; 327) is defined at least by two wedge segments (27a, 27b) or by a sickle segment (127) or is designed as a solid eccentric (327).

12. The fitting as claimed in one of the preceding claims, **characterized in that** a respective wrap spring brake (44) is provided for both directions of rotation of the driver (21).

13. An angle-adjustable seat component (3, 4) of a vehicle seat, in particular motor vehicle seat, with a fitting (10) as claimed in one of the preceding claims for adjusting an angle within the seat component (3, 5) or relative to another seat component (3, 4).

14. A vehicle seat, in particular motor vehicle seat, with at least one angle-adjustable seat component (3, 4) as claimed in claim 13.

## Revendications

1. Ferrure pour un siège de véhicule, en particulier pour un siège de véhicule automobile, comprenant une première partie de ferrure (11), une seconde partie de ferrure (12) en liaison d'engrenage avec la première partie de ferrure (11), un excentrique (27a, 27b ; 127 ; 327) monté à rotation sur les parties de ferrure (11, 12) pour l'entraînement d'un mouvement de déroulement depuis la première partie de ferrure (11) et la seconde partie de ferrure (12), un entraîneur (21) pour l'entraînement de l'excentrique (27a, 27b ; 127 ; 327) et un frein pour le blocage de la ferrure (10) par rapport à des couples mis en oeuvre côté sortie dans l'état de repos, **caractérisé par le fait qu'**il est prévu comme frein au moins un frein à ressort enroulé (44), que l'entraîneur (21) et/ou l'excentrique (27a, 27b ; 127 ; 327) actionnent, et **par le fait qu'**il est prévu comme pièce inverse pour l'effet de freinage une douille à ressort enroulé (46), sur laquelle le frein à ressort enroulé (44) s'applique, la douille à ressort enroulé (46) étant solidaire en rotation par rapport à la seconde partie de ferrure (12) ou étant conçue d'une seule pièce avec la seconde partie de ferrure (12).

2. Ferrure selon la revendication 1, **caractérisée par le fait que** le frein à ressort enroulé (44) présente deux bras à ressort enroulé (50) pour l'actionnement.

3. Ferrure selon l'une des revendications précédentes, **caractérisée par le fait que** l'entraîneur (21) agit en ouvrant sur le frein à ressort enroulé (44) et desserre celui-ci lors de l'entraînement.

4. Ferrure selon les revendications 2 et 3, **caractérisée par le fait que** l'entraîneur (21) présente au moins une came d'entraîneur (53, 55) qui, en cas d'application sur un bras à ressort enroulé (50) et de sollicitation de celui-ci, agit en ouvrant sur le frein à ressort enroulé (44).

5. Ferrure selon l'une dans revendications précédentes, **caractérisée par le fait que** l'excentrique (27a, 27b ; 127 ; 327) agit en ouvrant sur le frein à ressort enroulé (44).

6. Ferrure selon les revendications 2 et 5, **caractérisée par le fait que** l'excentrique (27a, 27b ; 127 ; 327) présente une came de commande (51) qui, en cas d'application sur un bras à ressort enroulé (50) et de sollicitation de celui-ci, agit en fermant sur le frein à ressort enroulé (44).

7. Ferrure selon l'une des revendications 1 à 6, **caractérisée par le fait que** la douille à ressort enroulé (46) conçue séparément présente plusieurs bras à douille à ressort enroulé (48) dépassant radialement, qui s'engagent par complémentarité de formes dans une denture intérieure de la seconde partie de ferrure (12).

8. Ferrure selon l'une des revendications 1 à 6, **caractérisée par le fait qu'**une tirette à collerette servant à la fixation de l'excentrique (27a, 27 ; 127, 327) avec son côté arrière opposé au côté de logement fait office de douille à ressort enroulé conçue d'un seul tenant.

9. Ferrure selon l'une des revendications précédentes, **caractérisée par le fait que** le frein à ressort enroulé (44) est intégré au niveau de la construction dans la ferrure (10).

10. Ferrure selon l'une des revendications précédentes, **caractérisée par le fait que** l'excentrique (27a, 27b ; 127 ; 327) est monté avec un faible frottement aussi bien sur la première partie de ferrure (11) que sur la seconde partie de ferrure (12), en particulier au moyen d'un palier à glissement (28, 41) et/ou palier à roulement et/ou d'un usinage de surface et/ou d'un traitement de surface.

11. Ferrure selon l'une des revendications précédentes, **caractérisée par le fait que** l'excentrique (27a, 27b ; 127 ; 327) est défini au moins par deux segments en forme de clavette (27a, 27b) ou par un segment en forme de croissant (127) ou est conçu comme excentrique fixe (327).

12. Ferrure selon l'une des revendications précédentes, **caractérisée par le fait qu'**un frein à ressort enroulé (44) est prévu pour chacun des deux sens de rotation de l'entraîneur (21).

13. Composant de siège (3,4) réglable en angle d'un siège de véhicule, en particulier siège de véhicule automobile, comprenant une ferrure (10) selon l'une des revendications précédentes pour le réglage d'un angle à l'intérieur du composant de siège (3, 5) ou par rapport à un autre composant de siège (3, 4).

14. Siège de véhicule, en particulier siège de véhicule automobile, comprenant au moins un composant de siège (3,4) réglable en angle selon la revendication 13.
